# EUROPÄISCHE PATENTSCHRIFT

(11) **EP 1 340 932 B1**
(45) Veröffentlichungstag und Bekanntmachung des Hinweises auf die Patenterteilung: **23.02.2005**
(21) Anmeldenummer: 02027447.8
(22) Anmeldetag: 10.12.2002
(51) Int. Cl.: F16K 31/50

(54) **Armatur mit Verstellorgan**
Armature with adjusting member
Armature avec organe de réglage

(30) Priorität: 27.02.2002 DE 10208540
(43) Veröffentlichungstag der Anmeldung: 03.09.2003
(73) Patentinhaber: Honeywell Technologies Sarl, 1110 Morges (CH)
(72) Erfinder: Pietsch, Jürgen, 45968 Gladbeck (DE)
(74) Vertreter: Fritz, Edmund Lothar, Dipl.-Chem.

(56) Entgegenhaltungen:
- EP-A- 0 134 866
- FR-A- 2 665 745
- GB-A- 742 579
- GB-A- 2 140 533

## Beschreibung

Die vorliegende Erfindung betrifft eine Armatur, umfassend ein Verstellorgan zur Betätigung einer axial verschieblich gelagerten Ventilspindel, wobei das Verstellorgan ein erstes Gewinde aufweist und durch Drehbewegung des Verstellorgans die Ventilspindel einen Hub vollführt und in eine Verschlussstellung beweglich ist, wobei das Verstellorgan neben dem ersten Gewinde ein zweites Gewinde aufweist, und bei axialem Hub des Verstellorgans die Ventilspindel sich einerseits in axialer Richtung mit dem Verstellorgan bewegt und sich andererseits zusätzlich gegenüber dem Verstellorgan um einen Hub bewegt, so dass sich für die Ventilspindel ein Gesamthub ergibt, wobei die Armatur ein Oberteil umfasst, welches einen Mehrkant für einen entsprechend geformten Abschnitt der Ventilspindel als Verdrehsicherung aufweist.

Armaturen mit Verstellorganen der eingangs genannten Art sind grundsätzlich bekannt. So ist zum Beispiel aus der EP 0 134 866 eine Armatur der eingangs genannten Art bekannt geworden, die als Verdrehsicherung für einen entsprechend geformten Abschnitt der Ventilspindel einen Mehrkant aufweist, der in dem dort gezeigten Ausführungsbeispiel als Innendreikant ausgebildet ist. Beispielsweise können diese vorbekannten Armaturen Wasser- oder Heizungsarmaturen sein, bei denen über ein von Hand betätigbares Verstellorgan eine Durchflussöffnung durch ein Ventil geöffnet, geschlossen oder gedrosselt wird. Der Hub der Ventilspindel wird dabei bestimmt durch die Steigung des Gewindes des Verstellorgans. Häufig ist eine größere Anzahl von Umdrehungen notwendig, um mittels des Verstellorgans die Ventilspindel so weit axial zu verschieben, dass sie in eine Verschlussstellung gelangt. Aus diesem Grunde kann die Handhabung einer solchen Armatur umständlich sein, da das Verschließen mittels des Verstellorgans, beispielsweise mittels eines Handrads relativ zeitraubend ist.

Ein weiterer Nachteil derartiger Armaturen mit Verstellorganen zum Verschließen eines Ventils besteht in der relativ großen Bauhöhe, die das Verstellorgan aufweist. Diese Bauhöhe ergibt sich zwangsläufig aufgrund der Tatsache, dass für den gewünschten Hub der Ventilspindel ein entsprechender Hub des Verstellorgans notwendig ist, so dass die Hubbewegung des Verstellorgans dem zurückzulegenden Hubweg der Ventilspindel entspricht und eine entsprechende Baulänge erfordert.

Hier setzt die vorliegende Erfindung an. Aufgabe der vorliegenden Erfindung ist es, eine Armatur mit Verstellorgan der eingangs genannten Gattung zu schaffen, bei der ein bestimmter gewünschter Hub der Ventilspindel mittels eines geringeren Hubs des Verstellorgans erzielbar ist.

Die Lösung dieser Aufgabe liefert eine erfindungsgemäße Armatur der eingangs genannten Gattung mit dem kennzeichnenden Merkmal des Hauptanspruchs. Es ist vorgesehen, dass das Verstellorgan ein erstes Gewinde und ein zweites Gewinde aufweist, und dass bei axialem Hub y des Verstellorgans die Ventilspindel sich einerseits in axialer Richtung mit dem Verstellorgan bewegt und sich andererseits zusätzlich gegenüber dem Verstellorgan um einen Hub x bewegt. Dadurch lässt sich ein gewünschter Gesamthub x + y, der beispielsweise notwendig ist, um die Ventilspindel in eine Verschlussstellung zu bewegen, erzielen, wobei das Verstellorgan lediglich einen geringeren Hubweg y zurücklegt. Die Lösung fußt darauf, dass durch die Schraubbewegung bei Betätigung des Verstellorgans dieses gegenüber einem anderen Armaturenteil in einem ersten Gewinde um einen Hubweg y axial verschoben wird, wobei sich aber gleichzeitig durch das zweite Gewinde die Ventilspindel innerhalb des Verstellorgans axial verschiebt. Dadurch, dass die Ventilspindel drehfest gehalten wird, führt die Schraubbewegung des sich mitdrehenden zweiten Gewindes, welches sich ebenfalls am Verstellorgan befindet zu einer Axialverschiebung der Ventilspindel. Es addieren sich somit der axiale Hubweg des Verstellorgans und der Weg, den die Ventilspindel gegenüber dem Verstellorgan zurücklegt.

Die Armatur umfasst ein Oberteil, welches sich beispielsweise fest in einem Gehäuseteil der Armatur befindet. Dieses Oberteil hat das Gewinde, welches dem ersten Gewinde des Verstellorgans entspricht. Dies ist erfindungsgemäß ein Außengewinde des Oberteils sein, welches einem ersten Innengewinde des Verstellorgans zugeordnet ist. Die genannte Ventilspindel kann dieses Oberteil, welches dann hülsenförmig ausgebildet ist, konzentrisch durchsetzen und ist vorzugsweise in dem Oberteil verdrehgesichert gehalten. An dem Verstellorgan kann sich dann ein zweites Gewinde befinden, welches unmittelbar einem Gewinde der Ventilspindel zugeordnet ist. Dieses zweite Gewinde kann beispielsweise ein zweites Innengewinde des Verstellorgans sein, dem ein Außengewinde der Ventilspindel zugeordnet ist. In der Regel haben das erste Gewinde des Verstellorgans und das zweite Gewinde des Verstellorgans einen umgekehrten Drehsinn, d. h., das eine Gewinde ist ein Linksgewinde und das andere ein Rechtsgewinde. Wird bei einer solchen konstruktiven Lösung das Verstellorgan, das beispielsweise ein Handrad mit den beiden genannten Innengewinden ist, verstellt, dann vollführt das Handrad einen Hub gegenüber dem Oberteil, welches wiederum an der Armatur fest angeordnet ist. Dieser erste Hub entspricht dem axialen Verstellweg y des Verstellorgans. Da andererseits ein Teil der Ventilspindel, beispielsweise ein Spindelkopf mit einem Gewinde in ein zweites Innengewinde des Handrads eingeschraubt ist und diese Ventilspindel andererseits verdrehfest aber axial verschieblich in dem Oberteil angeordnet ist, wird beim Verdrehen des Handrads zusätzlich die Spindel axial innerhalb des Handrads verschoben und zwar um den zweiten Hub x. Am anderen Ende der Ventilspindel kann sich ein Verschlusskörper befinden, beispielsweise ein Verschlussstück, welches in eine Schließstellung beweglich ist und dann an einem Ventilsitz anliegt. Dieses Verschlussstück bewegt sich dann um den Hub x + y, wenn das Verstellorgan (Handrad) lediglich den Hub y zurücklegt. Bei gleicher Steigung der beiden Gewinde können die Einzelhübe x bzw. y gleich sein. Die beiden Gewinde können aber auch unterschiedliche Steigungen aufweisen.

Durch die erfindungsgemäße Lösung erreicht man in jedem Fall mit relativ wenigen Umdrehungen des Verstellorgans einen relativ großen axialen Hub im Bereich der Ventilspindel, wodurch man die Baulänge des Verstellorgans und der Ventilspindel verringern kann und wodurch man damit die Baugröße des Ventils insgesamt reduzieren kann.

Für die erfindungsgemäße Anwendung kommen die unterschiedlichsten Armaturen in Betracht. Dies können beispielsweise Heizungsarmaturen oder Wasserleitungsarmaturen sein. Besonders geeignet ist die Erfindung beispielsweise für Absperrarmaturen an Wasserleitungen, für die häufig derartige mittels Handrad betätigbare Absperrorgane verwendet werden.

Die in den Unteransprüchen genannten Merkmal betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand eines Ausführungsbeispiels unter Bezugnahme auf die beiliegenden Zeichnungen näher beschrieben. Dabei zeigen
- Fig. 1: eine schematisch vereinfachte Längsschnittdarstellung eines erfindungsgemäßen Ventils in zwei verschiedenen Stellungen des Handrads;
- Fig. 2: einen Querschnitt durch das Ventil von Figur 1 entlang der Linie II II.

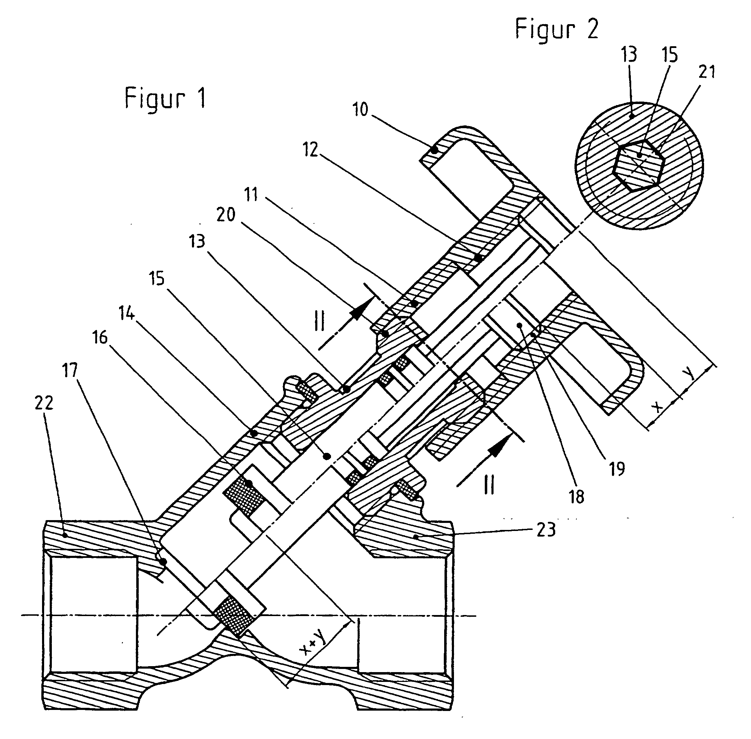

Zunächst wird auf Fig. 1 Bezug genommen. Figur 1 zeigt eine beispielhafte Anwendung der Erfindung. Das in der Darstellung im Längsschnitt gezeigte Ventil kann beispielsweise ein Strangventil für Wasserarmaturen sein, welches erfindungsgemäß mittels eines Handrads 10 eine axial verschiebbare Ventilspindel 15 betätigt. Die Ventilspindel 15 weist an ihrem Ende ein Verschlussstück 16 auf, welches innerhalb des Ventilgehäuses 14 axial verschiebbar geführt ist und gegen einen Ventilsitz 17 bewegt wird. Figur 1 zeigt in der linken Zeichnungshälfte das Ventil mit dem Verschlussstück 16 in einer geöffneten Stellung, während in der rechten Zeichnungshälfte das Verschlussstück 16 in die geschlossene Stellung bewegt wurde, in der es wie man sieht auf dem Ventilsitz 17 aufliegt und den Strömungsweg für ein Fluid durch das Ventilgehäuse versperrt. Das Ventil hat einen Gehäusekörper mit einem Eingangsstutzen 22 und einem Ausgangsstutzen 23, der axial mit dem Eingangsstutzen 22 fluchtet, wobei der Ventilsitz 17 in Strömungsrichtung zwischen diesen beiden angeordnet ist. In einem spitzen Winkel geht vom Eingangsstutzen 22 der Gehäuseteil 14 ab, der ein Oberteil 13 aufnimmt, welches in dem Gehäuseteil 14 drehfest und unverschieblich gehalten ist.

Dieses Oberteil 13 weist wie man Figur 1 entnehmen kann an seinem dem Ventilsitz 17 abgewandten Ende ein Außengewinde 20 auf, auf welches ein Innengewinde 11 des Handrads 10 aufgeschraubt ist. In einem sich axial an das Innengewinde 11 nach außen hin anschließenden Abschnitt weist das Handrad 10 außerdem ein zweites Innengewinde 12 auf, in welches ein Spindelkopf 18 einer axial verschieblichen Ventilspindel 15, der ein entsprechendes Außengewinde 19 aufweist, eingeschraubt ist. Das Innengewinde 11 des Handrads 10 und das zweite Innengewinde 12 des Handrads weisen unterschiedlichen Drehsinn auf, d. h., das eine ist ein Linksgewinde und das andere ein Rechtsgewinde oder umgekehrt.

Aus Figur 2 erkennt man, dass das dort geschnittene Oberteil 13 in dem Bereich, in dem es die Ventilspindel 15 axial verschieblich aufnimmt, einen Innensechskant 21 aufweist, der einer entsprechenden Sechskantform in der äußeren Kontur der Ventilspindel 15 entspricht, so dass sich für letztere eine Verdrehsicherung ergibt.

Die Funktion des erfindungsgemäßen Ventils bei der Verstellung wird nun unter erneuter Bezugnahme auf Figur 1 näher erläutert. Bei Betätigung des Handrads 10 aus der in Figur 1 links dargestellten Offenstellung des Verschlussstücks 16 wird zunächst das Handrad 10 mit seinem ersten dem Ventilsitz 17 zugewandten Innengewinde 11 auf das Außengewinde 20 des Oberteils 13 aufgeschraubt, wie man durch vergleich der linken und rechten Zeichnungshälften in Figur 1 erkennen kann. Dabei ergibt sich beispielsweise bei Betätigung einiger Umdrehungen des Handrads 10 ein Verstellweg y des Handrads 10 in axialer Richtung gegenüber dem Oberteil 13. Gleichzeitig bewirkt dabei das Innengewinde 12 gegenüber dem Gewindekopf 18 mit Außengewinde 19 der Ventilspindel 15, dass diese, die aufgrund des Innensechskants 21 in dem Oberteil 13 verdrehfest gehalten ist sich axial innerhalb des Handrads verschiebt, und zwar beispielsweise um den Verschiebeweg x. Da sich dabei gleichzeitig für das Handrad 10 der Verschiebeweg y ergibt, legt die Ventilspindel 15 insgesamt einen axialen Weg x + y zurück. Damit ergibt sich ein Gesamthub x + y für das dem Ventilsitz 17 zugewandte Verschlussstück 16 bei lediglich einem Hub y für das Handrad 10. Folglich kann man mit nur relativ wenigen Umdrehungen des Handrads 10 aufgrund der beiden vorhandenen Gewinde 11, 12 einen wesentlichen größeren Hub der Ventilspindel 15 und des Verschlussstücks 16 erzielen und somit mit vergleichsweise wenigen Umdrehungen des Handrads 10 das Verschlussstück aus einer vollständig geöffneten in eine vollständig geschlossene Stellung bewegen.

## Patentansprüche

1. Armatur, umfassend ein Verstellorgan zur Betätigung einer axial verschieblich gelagerten Ventilspindel, wobei das Verstellorgan ein erstes Gewinde aufweist und durch Drehbewegung des Verstellorgans die Ventilspindel einen Hub vollführt und in eine Verschlussstellung beweglich ist,
wobei das Verstellorgan (10) neben dem ersten Gewinde (11) ein zweites Gewinde (12) aufweist, und bei axialem Hub (y) des Verstellorgans die Ventilspindel (15) sich einerseits in axialer Richtung mit dem Verstellorgan bewegt und sich andererseits zusätzlich gegenüber dem Verstellorgan um einen Hub (x) bewegt, so dass sich für die Ventilspindel ein Gesamthub (x + y) ergibt,
wobei die Armatur ein Oberteil (13) umfasst, welches einen Mehrkant für einen entsprechend geformten Abschnitt der Ventilspindel (15) als Verdrehsicherung aufweist, **dadurch gekennzeichnet, dass** das Oberteil (13) einen Innensechskant (21) und ein einem ersten Innengewinde (11) des Verstellorgans zugeordnetes Außengewinde (20) aufweist.

2. Armatur nach Anspruch 1, **dadurch gekennzeichnet, dass** die Ventilspindel (15) an einem Ende ein Verschlussstück (16) aufweist, welches in eine Schließstellung beweglich ist, in der es an einem Ventilsitz (17) anliegt.

3. Armatur nach Anspruch 1 oder 2, **dadurch gekennzeichnet, dass** das Verstellorgan (10) ein Handrad ist.

4. Armatur nach einem der Ansprüche 1 bis 3, **dadurch gekennzeichnet, dass** das Verstellorgan (10) ein zweites Innengewinde (12) aufweist, dem ein Außengewinde (19) der Ventilspindel (15) zugeordnet ist.

5. Armatur nach einem der Ansprüche 1 bis 4, **dadurch gekennzeichnet, dass** die Ventilspindel (15) einen Spindelkopf (18) mit einem Gewinde (19) aufweist, welches dem zweiten Gewinde (12) des Verstellorgans (10) zugeordnet ist.

6. Armatur nach einem der Ansprüche 1 bis 5, **dadurch gekennzeichnet, dass** das erste Gewinde (11) des Verstellorgans (10) ein Linksgewinde ist und das zweite Gewinde (12) des Verstellorgans ein Rechtsgewinde ist oder umgekehrt.

7. Armatur nach einem der Ansprüche 1 bis 6, **dadurch gekennzeichnet, dass** diese eine Schließarmatur für Wasserleitungen oder Heizungssysteme ist.

8. Armatur nach einem der Ansprüche 1 bis 7, **dadurch gekennzeichnet, dass** die Achse der Ventilspindel (15) in einem spitzen Winkel zu einem Eingangsstutzen (22) und/oder einem Ausgangsstutzen (23) eines Armaturengehäuses angeordnet ist.

## Claims

1. Fitting comprising an adjusting element for actuating an axially displaceably mounted valve spindle, the adjusting element having a first thread and, as a result of rotary movement of the adjusting element, the valve spindle executing a displacement and being moveable into a closure position,
the adjusting element (10) having a second thread (12) alongside the first thread (11) and, in the case of axial displacement (y) of the adjusting element, the valve spindle (15), on the one hand, moving in the axial direction with the adjusting element and, on the other hand, additionally moving by a displacement (x) in relation to the adjusting element, this resulting in an overall displacement (x + y) for the valve spindle,
the fitting comprising a top part (13) which has a polygonal portion for a correspondingly shaped portion of the valve spindle (15) as rotation-prevention means, **characterized in that** the top part (13) has a hexagon socket (21) and an external thread (20) assigned to a first internal thread (11) of the adjusting element.

2. Fitting according to Claim 1, **characterized in that** the valve spindle (15), at one end, has a closure component (16) which can be moved into a closing position, in which it butts against a valve seat (17).

3. Fitting according to Claim 1 or 2, **characterized in that** the adjusting element (10) is a hand wheel.

4. Fitting according to one of Claims 1 to 3, **characterized in that** the adjusting element (10) has a second internal thread (12), which is assigned an external thread (19) of the valve spindle (15).

5. Fitting according to one of Claims 1 to 4, **characterized in that** the valve spindle (15) has a spindle head (18) with a thread (19) which is assigned to the second thread (12) of the adjusting element (10).

6. Fitting according to one of Claims 1 to 5, **characterized in that** the first thread (11) of the adjusting element (10) is a left-handed thread and the second thread (12) of the adjusting element is a right-handed thread or vice versa.

7. Fitting according to one of Claims 1 to 6, **characterized in that** this is a closing fitting for water lines or heating systems.

8. Fitting according to one of Claims 1 to 7, **characterized in that** the axis of the valve spindle (15) is arranged at an acute angle in relation to an inlet connector (22) and/or an outlet connector (23) of a fitting housing.

## Revendications

1. Armature, comprenant un organe de réglage pour l'actionnement d'une tige de soupape montée à coulissement, l'organe de réglage présentant un premier filetage et par mouvement de rotation de l'organe de réglage, la tige de soupape subissant une course et pouvant se déplacer dans une position de fermeture,
l'organe de réglage (10) présentant en plus du premier filetage (11) un deuxième filetage (12) et lors de la course axiale (y) de l'organe de réglage, la tige de soupape (15) se déplaçant d'une part dans la direction axiale avec l'organe de réglage et se déplaçant d'autre part en plus par rapport à l'organe de réglage d'une course (x), de sorte que l'on obtienne pour la tige de soupape une course totale (x + y),
l'armature comprenant une partie supérieure (13) qui présente un polygone pour une portion de la tige de soupape (15) de forme correspondante en tant que fixation contre la rotation, **caractérisée en ce que** la partie supérieure (13) présente un hexagone interne (21) et un filetage extérieur (20) associé au premier filetage intérieur (11) de l'organe de réglage.

2. Armature selon la revendication 1, **caractérisée en ce que** la tige de soupape (15) présente à une extrémité une pièce de fermeture (16) qui peut se déplacer dans une position de fermeture dans laquelle elle s'applique contre un siège de soupape (17).

3. Armature selon la revendication 1 ou 2, **caractérisée en ce que** l'organe de réglage (10) est une roue à main.

4. Armature selon l'une quelconque des revendications 1 à 3, **caractérisée en ce que** l'organe de réglage (10) présente un deuxième filetage intérieur (12) auquel est associé un filetage extérieur (19) de la tige de soupape (15).

5. Armature selon l'une quelconque des revendications 1 à 4, **caractérisée en ce que** la tige de soupape (15) présente une tête de tige (18) avec un filetage (19) qui est associé au deuxième filetage (12) de l'organe de réglage (10).

6. Armature selon l'une quelconque des revendications 1 à 5, **caractérisée en ce que** le premier filetage (11) de l'organe de réglage (10) est un filetage à gauche et le deuxième filetage (12) de l'organe de réglage est un filetage à droite ou inversement.

7. Armature selon l'une quelconque des revendications 1 à 6, **caractérisée en ce que** celle-ci est une armature de fermeture pour des conduites d'eau ou des systèmes de chauffage.

8. Armature selon l'une quelconque des revendications 1 à 7, **caractérisée en ce que** l'axe de la tige de soupape (15) est disposé suivant un angle aigu par rapport à un raccord d'entrée (22) et/ou un raccord de sortie (23) d'un boîtier d'armature.
